# EUROPEAN PATENT APPLICATION

(11) **EP 4 787 015 A1**
(43) Date of publication of application: **05.08.2026**
(21) Application number: 24871580.7
(22) Date of filing: 20.08.2024
(51) Int. Cl.: G01S 13/34

(54) **INFORMATION PROCESSING DEVICE, INFORMATION PROCESSING METHOD, AND RADAR DEVICE**

(30) Priority: 25.09.2023 JP 2023159359
(71) Applicant: Sony Semiconductor Solutions Corporation, Atsugi-shi, Kanagawa 243-0014 (JP)
(72) Inventor: SASAKI, Ryo, Atsugi-shi, Kanagawa 243-0014 (JP)
(74) Representative: Müller Hoffmann & Partner
(86) International application number: PCT/JP2024/029400
(87) International publication number: WO 2025/069778

(57) **Abstract**

An information processing apparatus according to an embodiment of the present technology includes a calculating section and a detecting section. The calculating section calculates a phase of a beat signal generated on the basis of a transmission chirp signal transmitted toward an object by a transmission antenna and a reflection chirp signal which is the transmission chirp signal received by a reception antenna and reflected by the object. The detecting section detects presence or absence of an unwanted signal on the basis of the phase of the beat signal. Thereby, accurate detection of interference signals becomes possible.

## Description

### Technical Field

The present technology relates to an information processing apparatus, an information processing method, and a radar apparatus that can be applied to radar interference sensing.

### Background Art

Patent Literature 1 describes an FMCW (Frequency Modulated Continuous Wave) radar apparatus that transmits a transmission signal frequency modulated to have a frequency that linearly varies over time, receives a reception signal which is the transmission signal reflected by a target object and measures the distance to the target object on the basis of the frequency of a beat signal obtained by multiplying the reception signal and the frequency modulated local signal. This FMCW radar apparatus senses an envelope of the beat signal over a predetermined period, sorts the magnitudes of amplitudes of the envelope and sets a threshold for interference sensing on the basis of the amplitude average value. This allows for interference sensing and interference prevention by making it possible to more appropriately set the threshold for interference sensing. (Paragraphs [0034] to [0045], Figs. 1 to 3, and the like of the specification of Patent Literature 1).

### Citation List

### Patent Literature

Patent Literature 1: JP 2022-108639 A

### Disclosure of Invention

### Technical Problem

An information processing apparatus, an information processing method, and a radar apparatus that enable implementation of such accurate detection of interference signals are demanded.

In view of a circumstance like the one above, an object of the present technology is to provide an information processing apparatus, an information processing method, and a radar apparatus that enable implementation of accurate detection of interference signals.

### Solution to Problem

In order to achieve the object described above, an information processing apparatus according to an embodiment of the present technology includes a calculating section and a detecting section.

The calculating section calculates a phase of a beat signal generated on the basis of a transmission chirp signal transmitted toward an object by a transmission antenna and a reflection chirp signal which is the transmission chirp signal received by a reception antenna and reflected by the object.

The detecting section detects presence or absence of an unwanted signal on the basis of the phase of the beat signal.

The information processing apparatus calculates the phase of the beat signal generated on the basis of the transmission chirp signal transmitted toward the object by the transmission antenna and the reflection chirp signal which is the transmission chirp signal received by the reception antenna and reflected by the object and detects the presence or absence of the unwanted signal on the basis of the phase of the beat signal. Thereby, accurate detection of interference signals becomes possible.

The detecting section may detect the presence or absence of the unwanted signal on the basis of a phase difference which is a difference between the phase of the beat signal at a first time and the phase of the beat signal at a second time different from the first time.

The detecting section may detect the presence or absence of the unwanted signal on the basis of the phase difference and amplitude of the beat signal.

The unwanted signal may include an interference signal transmitted from another transmission antenna different from the transmission antenna.

The detecting section may detect the presence or absence of the interference signal on the basis of a product value obtained by multiplying the phase difference and the amplitude.

The detecting section may detect the presence or absence of the interference signal on the basis of an absolute value of the product value.

The detecting section may detect the presence or absence of the interference signal by performing a moving average on the absolute value of the product value.

The detecting section may detect the presence or absence of the interference signal in a case where the absolute value of the product value is greater than a predetermined threshold.

The detection of the presence or absence of the interference signal may include detection of an interference occurrence time interval which is a time interval during which the interference signal is being generated. In this case, the interference occurrence time interval may be an interval during which the absolute value of the product value is greater than a predetermined threshold.

The detecting section may detect the presence or absence of the interference signal by generating an envelope of the absolute value of the product value.

The predetermined threshold may be calculated from an average value of the absolute value of the product value.

The beat signal may be acquired from a real signal and an imaginary signal.

The beat signal may be acquired from the real signal and a Hilbert-transformed signal of the real signal.

An information processing method according to an embodiment of the present technology is an information processing method executed by a computer system, the information processing method including calculating a phase of a beat signal generated on the basis of a transmission chirp signal transmitted toward an object by a transmission antenna and a reflection chirp signal which is the transmission chirp signal received by a reception antenna and reflected by the object.

Presence or absence of an unwanted signal is detected on the basis of the phase of the beat signal.

A radar apparatus according to an embodiment of the present technology includes a transmission antenna, a reception antenna, and an information processing apparatus.

The transmission antenna transmits a transmission chirp signal toward an object.

The reception antenna receives a reflection chirp signal which is the transmission chirp signal reflected by the object.

The information processing apparatus includes: a calculating section that calculates a phase of a beat signal generated on the basis of the transmission chirp signal and the reflection chirp signal; and a detecting section that detects presence or absence of an unwanted signal on the basis of the phase of the beat signal.

### Brief Description of Drawings

[Fig. 1] Fig. 1 is a block diagram illustrating a configuration example of a radar apparatus.
[Fig. 2] Fig. 2 is a drawing illustrating an example of a beat signal including unwanted waves.
[Fig. 3] Fig. 3 is a drawing illustrating an example of the phase of the beat signal including unwanted waves.
[Fig. 4] Fig. 4 is a drawing illustrating an example of the manner of determining a phase difference.
[Fig. 5] Fig. 5 is a drawing illustrating the calculated phase difference of the beat signal.
[Fig. 6] Fig. 6 is a drawing illustrating the calculated amplitude of the beat signal.
[Fig. 7] Fig. 7 is a drawing illustrating a product value obtained by multiplying the phase difference and the amplitude.
[Fig. 8] Fig. 8 is a drawing illustrating an example of the amplitude and a gate of the beat signal.
[Fig. 9] Fig. 9 is a drawing illustrating the product value obtained by multiplying the phase difference and the amplitude and the gate.
[Fig. 10] Fig. 10 is a drawing illustrating a graph in which the absolute value of the product value obtained by multiplying the phase difference and the amplitude is taken.
[Fig. 11] Fig. 11 is a drawing illustrating a graph in which a moving average is performed on the absolute value of the product value.
[Fig. 12] Fig. 12 is a drawing in which a threshold is written in the graph in which the moving average is performed on the absolute value of the product value.
[Fig. 13] Fig. 13 is a drawing illustrating a gate.
[Fig. 14] Fig. 14 is a drawing illustrating a graph in which an envelope is generated for the absolute value of the product value.
[Fig. 15] Fig. 15 is a flowchart illustrating interference signal sensing.
[Fig. 16] Fig. 16 is a block diagram illustrating a configuration example of a vehicle control system.
[Fig. 17] Fig. 17 is a drawing illustrating examples of the sensing regions of an external recognition sensor of the vehicle control system illustrated in Fig. 1.

### Mode(s) for Carrying Out the Invention

Hereinbelow, embodiments according to the present technology are explained with reference to the drawings.

### <First Embodiment>

### [Configuration of Radar Apparatus]

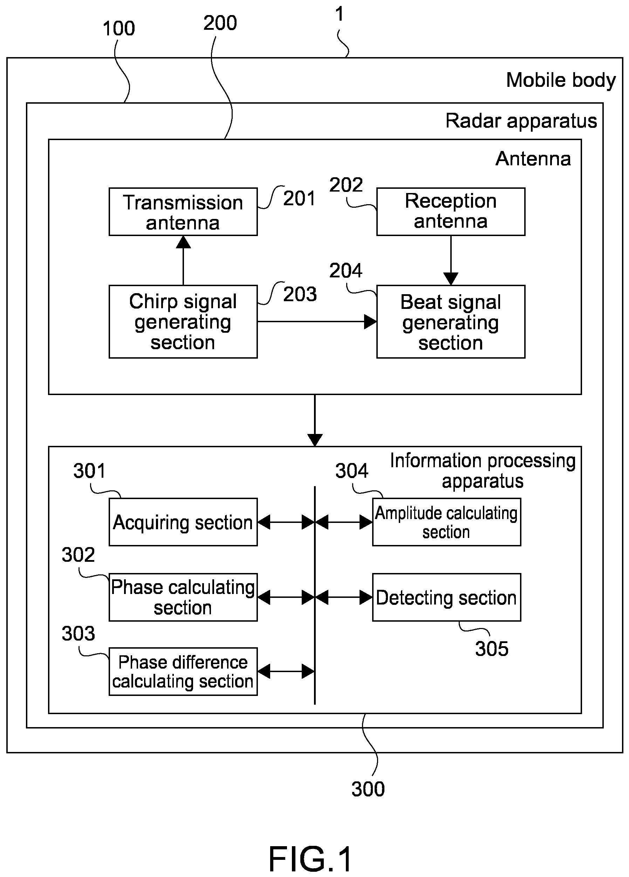

Fig. 1 is a block diagram illustrating a configuration example of a radar apparatus 100 according to a first embodiment of the present technology.

As illustrated in Fig. 1, the radar apparatus 100 is mounted on a mobile body 1 and includes an antenna 200 and an information processing apparatus 300. For example, the mobile body 1 may be a vehicle, an aircraft, or the like operated by a user or may be a drone or the like that is capable of automatically moving to a destination on the basis of a predetermined program or results of sensing by a radar.

The antenna 200 has a transmission antenna 201, a reception antenna 202, a chirp signal generating section 203, and a beat signal generating section 204.

The transmission antenna 201 emits a chirp signal generated by the chirp signal generating section 203 mentioned later toward an object. Hereinbelow, the chirp signal transmitted toward an object is written as a transmission chirp signal. In addition, the reception antenna 202 receives a reflection chirp signal which is the transmission chirp signal reflected by the object.

Note that the numbers and arrangement of the transmission antenna 201 and the reception antenna 202 are not limited. For example, the transmission antenna 201 and the reception antenna 202 may be arranged in different numbers in horizontal MIMO (Multi Input Multi output), vertical MIMO, or the like.

The chirp signal generating section 203 generates the transmission chirp signal. Note that the method of generating the transmission chirp signal is not limited. For example, an FMCW signal, such as a triangular wave or a sawtooth wave, having frequency that varies in accordance with a control voltage that linearly varies at predetermined intervals may be generated, and a signal obtained by amplifying the FMCW signal may be output from the transmission antenna 201 as the transmission chirp signal.

The beat signal generating section 204 generates a beat signal on the basis of the transmission chirp signal transmitted toward the object by the transmission antenna 201 and the reflection chirp signal received by the reception antenna 202. The beat signal is also called an IF (Intermediate Frequency, intermediate frequency) signal and is a signal that is obtained by mixing the transmission chirp signal and the reflection chirp signal and has, as a frequency component, the difference between the frequency of the transmission chirp signal and the frequency of the reflection chirp signal. In the present embodiment, the generated beat signal is supplied to the information processing apparatus 300.

Note that the method of generating the beat signal also is not limited. An amplifier that amplifies the reflection chirp signal or the like may be used. In addition, unwanted frequency components may be removed from the generated beat signal by a low pass filter or the like.

The information processing apparatus 300 includes an acquiring section 301, a phase calculating section 302, a phase difference calculating section 303, an amplitude calculating section 304, and a detecting section 305.

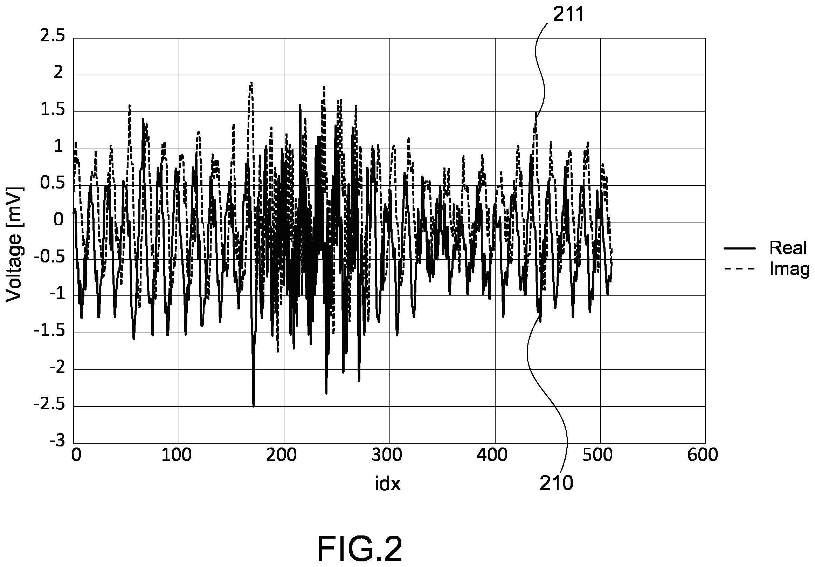

The acquiring section 301 acquires the beat signal output from the beat signal generating section 204. Here, an example of the beat signal in the present embodiment is illustrated using Fig. 2. Fig. 2 is a drawing illustrating an example of the beat signal. In Fig. 2, the vertical axis represents voltage [mV], and the horizontal axis represents idx (index, time).

In the present embodiment, as illustrated in Fig. 2, the beat signal is acquired from a real signal (solid line 210) and an imaginary signal (dotted line 211) transmitted from the transmission antenna 201. Note that the interval in Fig. 2 where the beat signal varies significantly from just before idx = 200 to just before idx = 300 is an interval including unwanted signals.

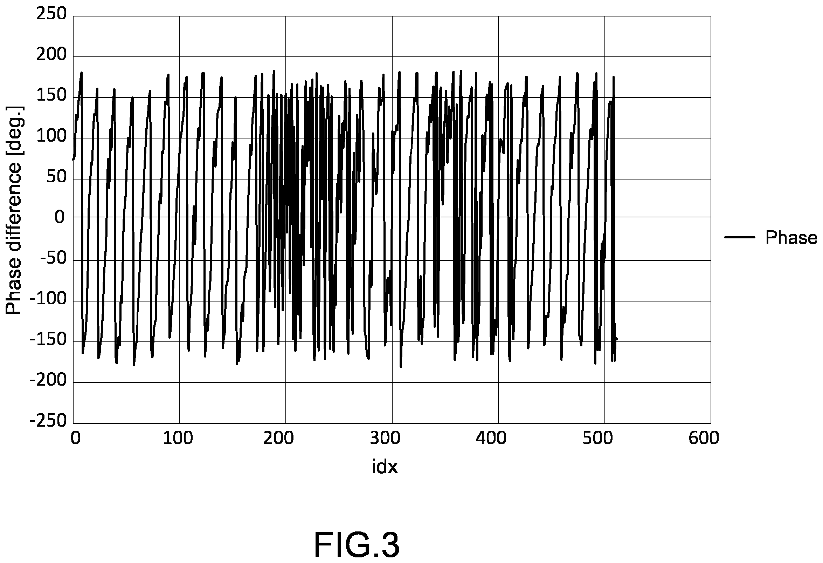

The phase calculating section 302 calculates the phase of the beat signal. Fig. 3 is a drawing illustrating an example of the phase of the beat signal including unwanted signals. In Fig. 3, the vertical axis represents phase difference [deg], and the horizontal axis represents the index (idx) of the beat signal. As illustrated in Fig. 3, the phase calculating section 302 calculates the phase of the beat signal from the values of the real signal and imaginary signal of the beat signal.

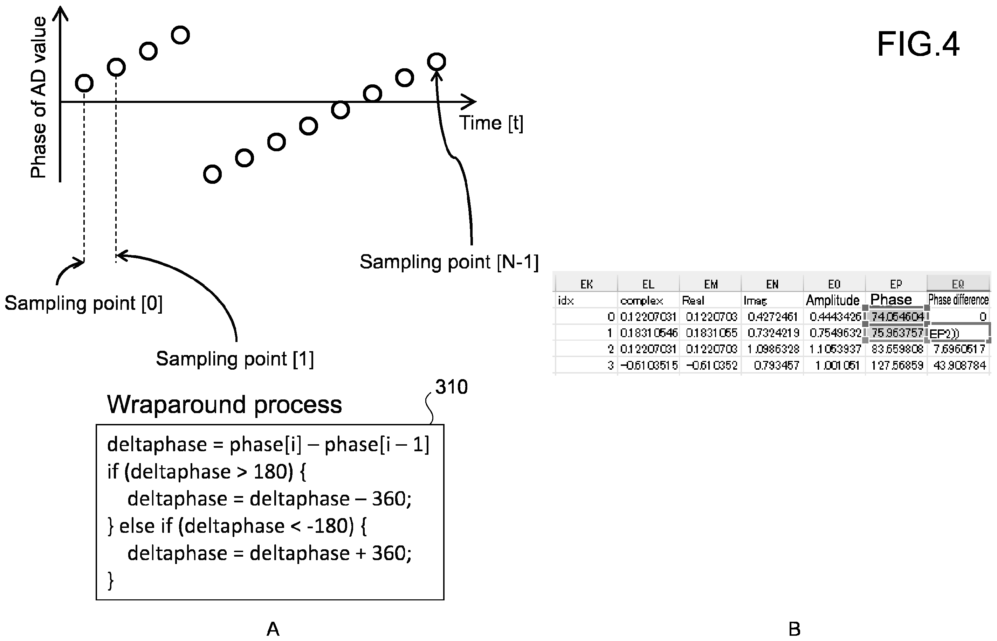

The phase difference calculating section 303 calculates the phase difference of the beat signal. In the present embodiment, the phase difference calculating section 303 calculates the phase difference of the beat signal by calculating the phase difference of the beat signal over a predetermined time interval. Here, an example of the manner of determining the phase difference in the present embodiment is illustrated using Fig. 4.

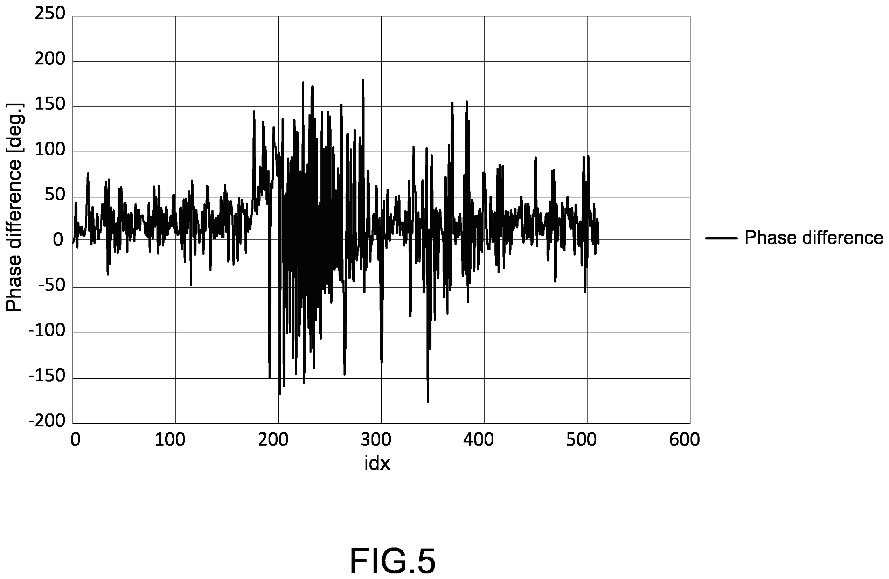

Fig. 4 is a drawing illustrating the example of the manner of determining the phase difference. Fig. 5 is a drawing illustrating the calculated phase difference of the beat signal. In Fig. 5, the vertical axis represents phase difference [deg], and the horizontal axis represents the index (idx) of the beat signal.

As illustrated in Fig. 4A, the phase difference is calculated on the basis of the phase of the AD value of a plurality of sampling points of the beat signal sampled at predetermined time intervals. For example, the phase difference is calculated as the difference between the phase of a sampling point N and the phase of a sampling point (N-1). Note that, in a case where the phase difference is greater than ±180 degrees, a wraparound process (see 310) is performed. That is, a process of subtracting 360 degrees from the phase difference in a case where the phase difference is greater than 180 degrees and adding 360 degrees to the phase difference in a case where the phase difference is smaller than -180 degrees is performed.

More specifically, as illustrated in Fig. 4B, the phase difference is the difference between data of the phase (EP column). For example, the value of the first (idx = 0) phase difference is 0. In addition, for example, the second (idx = 1) phase difference is the second phase (EP3) - the first phase (EP2).

By repeating the computation in this manner, the phase difference calculating section 303 determines the phase difference which is the difference between the phase of the beat signal at a first time and the phase of the beat signal at a second time different from the first time and calculates the phase difference of the beat signal as illustrated in Fig. 5.

The amplitude calculating section 304 calculates the amplitude of the beat signal. For example, the amplitude calculating section 304 may calculate the amplitude of the beat signal from the square root value of the sum of squares of the beat signal converted into digital values by AD conversion by an AD converter (not illustrated).

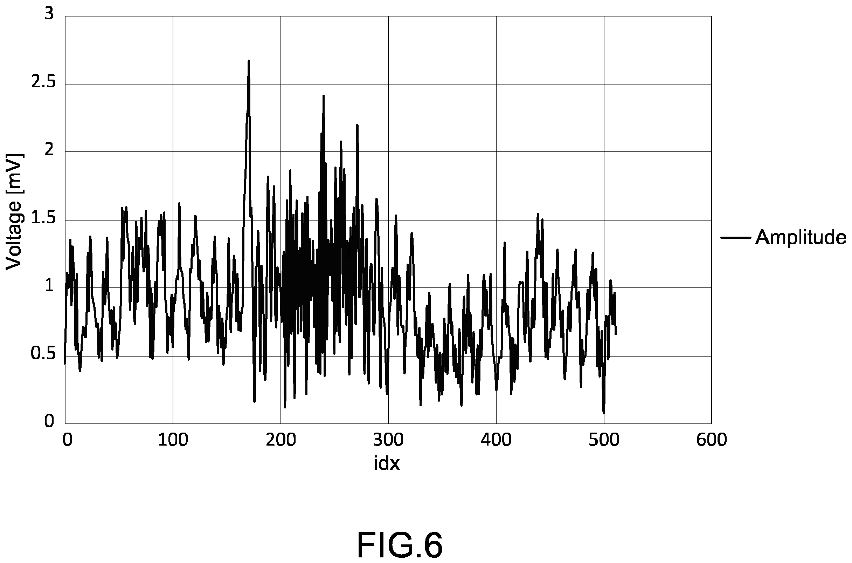

Fig. 6 is a drawing illustrating the calculated amplitude of the beat signal. In Fig. 6, the vertical axis represents voltage [mV], and the horizontal axis represents index (idx). As illustrated in Fig. 6, the amplitude calculating section 304 calculates the amplitude of the beat signal from the values of the real signal and imaginary signal of the beat signal.

The detecting section 305 detects the presence or absence of unwanted signals on the basis of the phase of the beat signal. The unwanted signals include an interference signal (e.g. parallel interference or multipath interference) transmitted from another radar apparatus (another mobile body) different from the radar apparatus 100 (mobile body 1) and various signals having an increased phase difference due to causes other than interference such as thermal noise. That is, the unwanted signals are signals that serve as a cause of a hindrance to accurate radar sensing (a cause of generation of ghosts).

In the present embodiment, the detecting section 305 detects the presence or absence of unwanted signals on the basis of the phase difference of the beat signal calculated by the phase difference calculating section 303 and the amplitude of the beat signal calculated by the amplitude calculating section 304. Specifically, the detecting section 305 detects an interference signal by determining a product value obtained by multiplying the phase difference and the amplitude. Hereinbelow, the product value obtained by multiplying the phase difference and the amplitude is simply written as a product value, in some cases.

There is a possibility that a detection error occurs if detection is performed simply on the basis of the phase signal as illustrated in Fig. 5. For example, there can be a case where the amplitude of a signal is small, and the FMCW frequency is high because the signal is from a remote location, a case where the phase difference of noise is large, and the like. In view of this, in the present embodiment, signals having a small amplitude and a large phase difference like the ones described above are excluded by multiplying the phase difference and the amplitude.

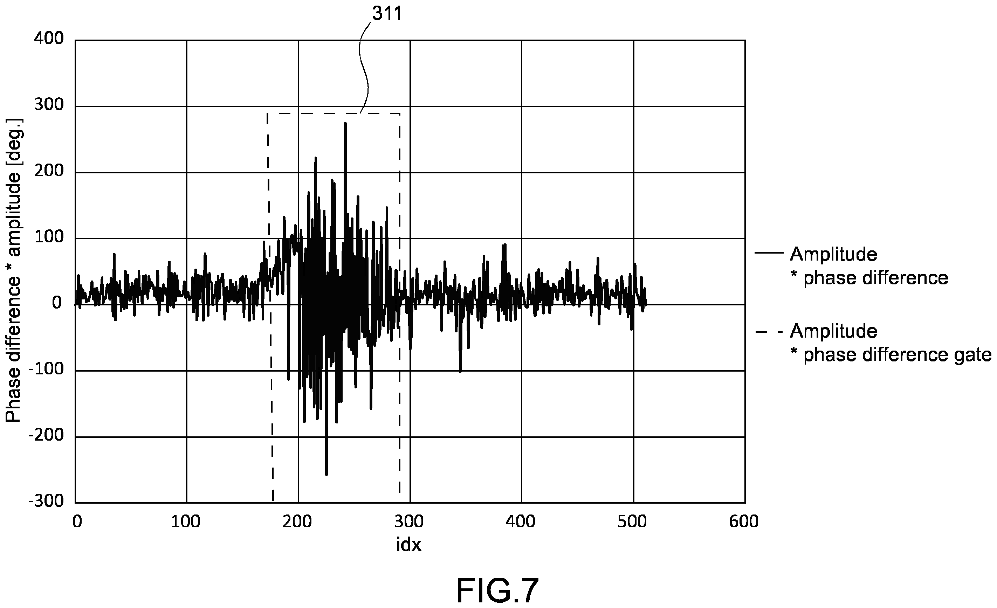

Fig. 7 is a drawing illustrating the product value obtained by multiplying the phase difference and the amplitude. As illustrated in Fig. 7, by removing noise or the like other than interference signals in unwanted signals, a gate 311 representing the occurrence of interference can be generated. That is, the detecting section 305 is capable of correctly detecting, in the beat signal, an interference occurrence time interval (the width of the gate 311), which is a time interval during which interference is present. That is, detecting the presence or absence of an interference signal can be rephrased as detecting the interference occurrence time interval.

Note that the gate represents the presence or absence of the occurrence of interference by assigning 1 in a case where a predetermined threshold is exceeded and assigning 0 in a case where the predetermined threshold is not exceeded. Whereas only one gate having a width (interference occurrence time interval) is generated in Fig. 7, this is not the sole example. There can be a case where a plurality of gates is generated or a case where a gate with a very short interference occurrence time interval is generated.

As has been described thus far, the information processing apparatus 300 according to the first embodiment calculates the phase of the beat signal generated on the basis of the transmission chirp signal transmitted toward an object by the transmission antenna 201 and the reflection chirp signal which is the transmission chirp signal received by the reception antenna 202 and reflected by the object and detects the presence or absence of unwanted signals on the basis of the phase of the beat signal. Thereby, interference signals can be detected accurately. In particular, even an interference signal having a small amplitude and an interference signal having a large amplitude can be detected accurately.

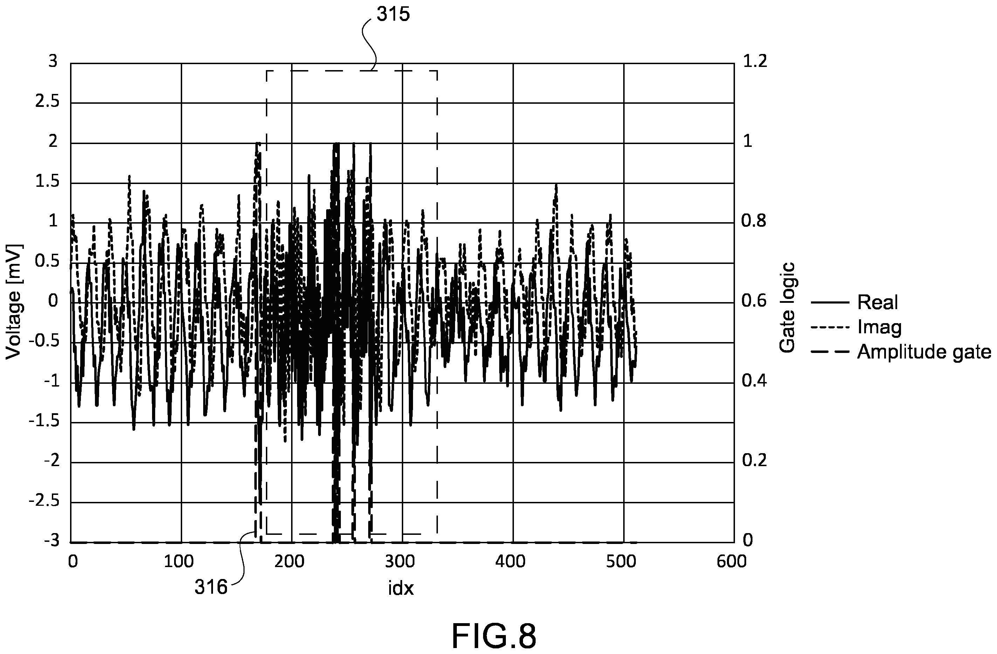

Conventionally, the amplitude of a beat signal (IF signal) which is a signal immediately after AD of a radar is monitored, and a time period during which the amplitude becomes greater than a threshold is detected as a time period during which interference is present. However, in a case where an interference signal is detected simply on the basis of amplitude, an interference signal having a small amplitude cannot be detected. For example, as illustrated in Fig. 8, since the amplitude of a signal in an interval during which interference is present (rectangular 315) and the amplitude of the signal in an interval during which interference is not present (region outside the rectangular 315) are approximately the same, a gate representing interference occurrence cannot be generated simply on the basis of amplitude (see a dotted line 316 in Fig. 8).

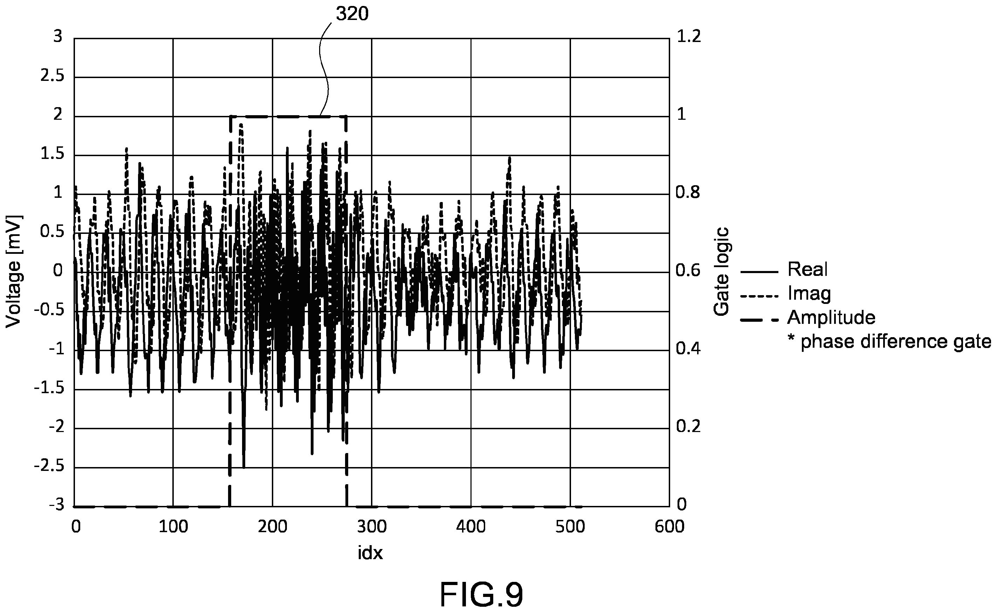

In the present technology, an interference signal is detected on the basis of the phase difference of the beat signal. By further multiplying the phase difference and amplitude of the beat signal, it is possible to accurately detect an interference signal even when the interference signal has a large amplitude or a small amplitude. That is, a gate 320 representing an interference occurrence time interval can be generated correctly as illustrated in Fig. 9.

### <Second Embodiment>

A radar apparatus according to a second embodiment of the present technology is explained. In the following explanation, explanation of portions that have configurations and provide effects similar to those in the radar apparatus 100 explained in the embodiment described above is omitted or simplified.

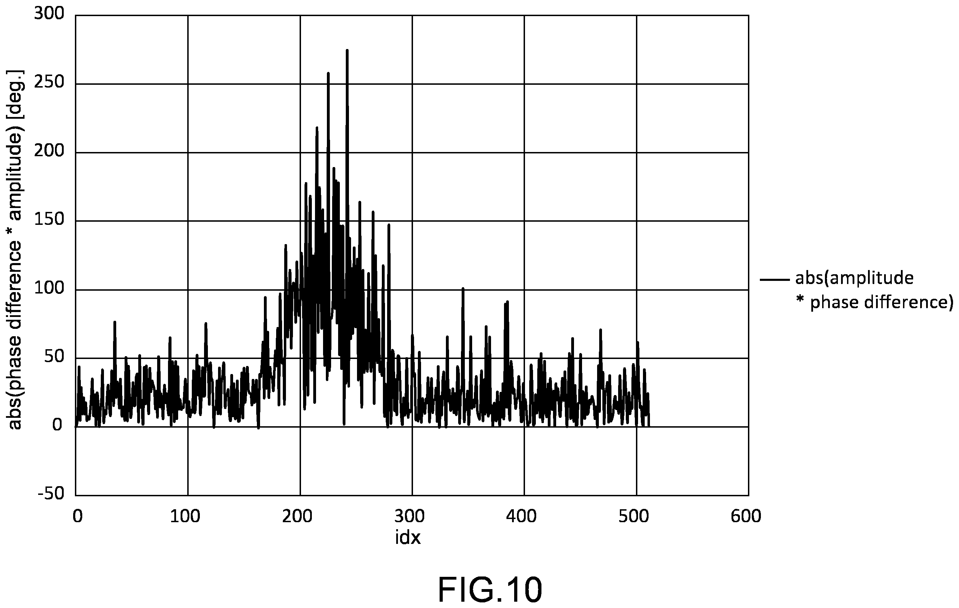

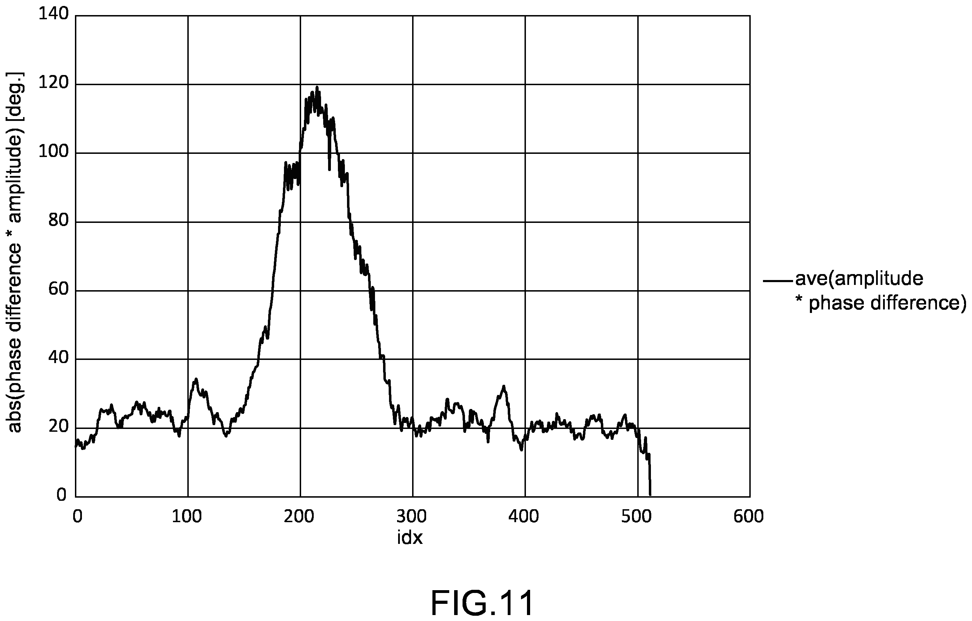

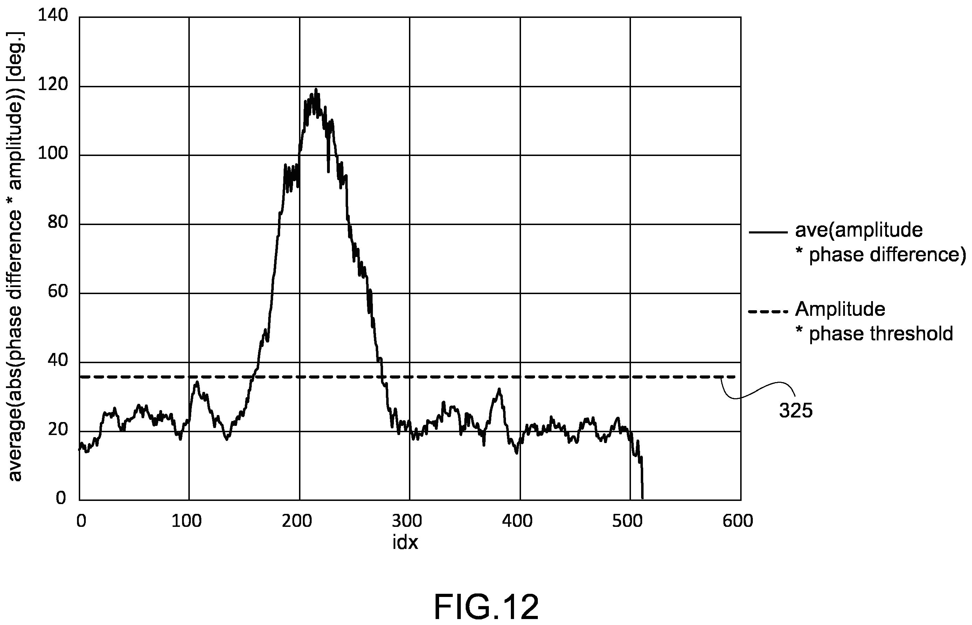

Fig. 10 is a drawing illustrating a graph in which the absolute value of the product value obtained by multiplying the phase difference and the amplitude is taken. Fig. 11 is a drawing illustrating a graph in which a moving average is performed on the absolute value of the product value. In Fig. 10 and Fig. 11, the vertical axis represents the absolute value [deg] of the product value, and the horizontal axis represents the index (idx). In addition, Fig. 12 is a drawing in which a threshold is written in the graph in which the moving average is performed on the absolute value of the product value.

In the embodiment described above, the gate is generated on the basis of the product value obtained by multiplying the phase difference and the amplitude. In the second embodiment, the detecting section 305 takes the absolute value of the product value obtained by multiplying the phase difference and the amplitude (see Fig. 10).

In addition, in the second embodiment, the detecting section 305 performs a moving average on the absolute value of the product value. Thereby, the absolute value of the product value is smoothened (see Fig. 11).

In addition, the detecting section 305 sets a threshold for generating a gate (a dotted line 325 in Fig. 12). For example, the detecting section 305 sets the average value of the absolute value of the product value as the threshold. Note that the threshold setting method is not limited to this. For example, a threshold on the basis of which a signal can be determined as an interference signal may be set by learning features of previously detected interference signals such as the amplitude, phase differences, product values, or the absolute values of the product values of the interference signals.

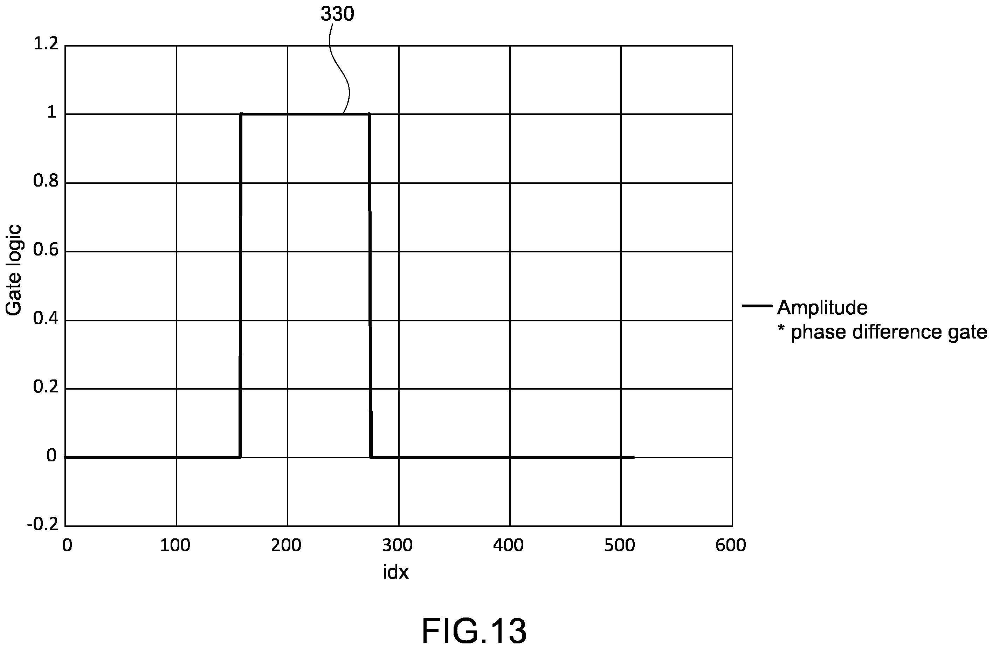

In a case where the absolute value of the product value on which the moving average has been performed is greater than the threshold set by the detecting section 305, a gate 330 as illustrated in Fig. 13 is generated. That is, a time period during which the absolute value of the product value is greater than the predetermined threshold is detected as an interference occurrence time interval.

### <Third Embodiment>

A radar apparatus according to a third embodiment of the present technology is explained.

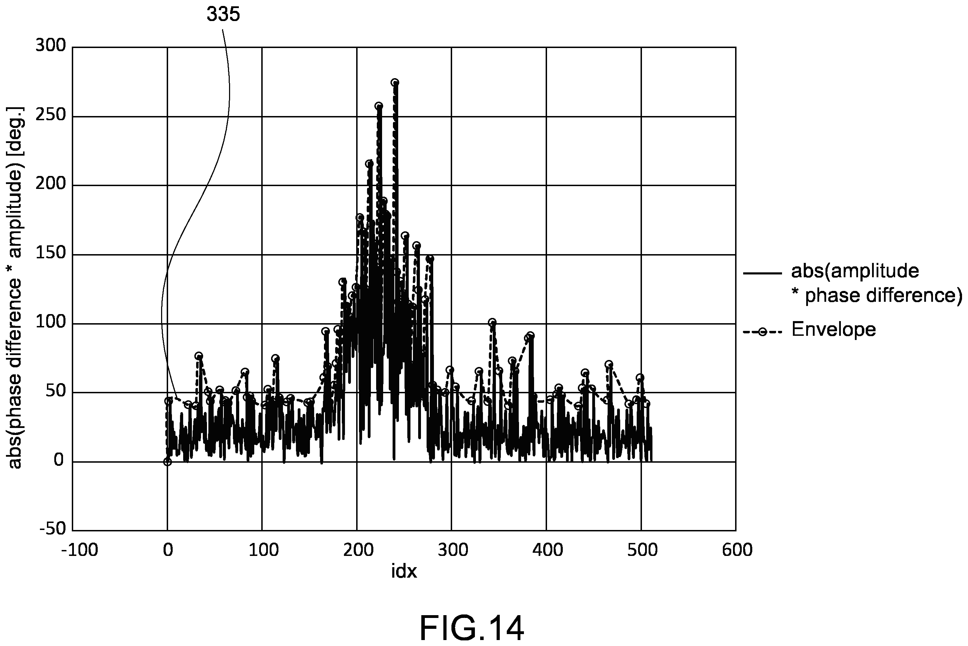

In the third embodiment, the detecting section 305 generates an envelope of the value of the phase difference of the beat signal. For example, in Fig. 14, an envelope 335 of the value of the absolute value (see Fig. 10) of the product value is generated.

The detecting section 305 detects an interference signal on the basis of the phase of the generated envelope 335 as illustrated in Fig. 14. That is, in a case where the phase of the envelope is greater than a predetermined threshold, an interference occurrence time interval is detected by generating a gate.

Note that the parameter to be used when the envelope is generated is not limited, and an envelope may be generated for the phase difference (see Fig. 5) or the product value of the phase difference and the amplitude (see Fig. 7).

As illustrated in the second embodiment and the third embodiment, a gate may be generated by taking the absolute value of the product value of the phase difference and the amplitude, performing a moving average, or generating an envelope. Thereby, an interference signal can be more accurately detected.

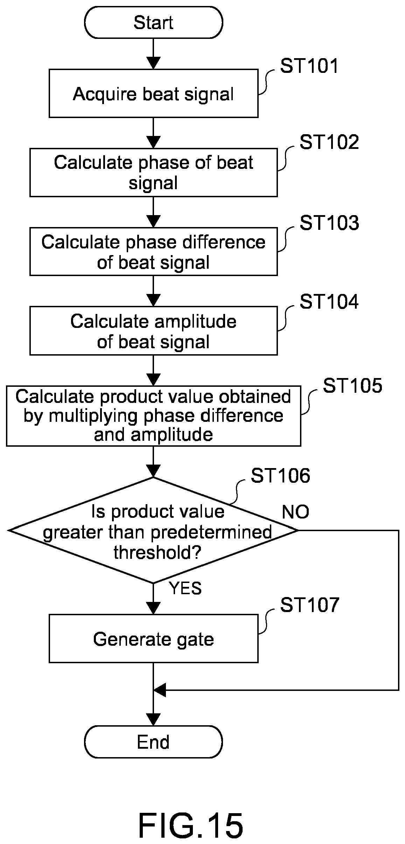

Here, a flowchart of detection of an interference signal performed by the information processing apparatus 300 is illustrated using Fig. 15. Note that the flowchart illustrated in Fig. 15 illustrates a process performed by the information processing apparatus in the first embodiment.

Fig. 15 is a flowchart illustrating interference signal sensing.

As illustrated in Fig. 15, the acquiring section 301 acquires the beat signal (Step 101).

The phase calculating section 302 calculates the phase of the acquired beat signal (Step 102). In addition, the phase difference calculating section 303 calculates the phase difference of the beat signal (Step 103). Furthermore, the amplitude calculating section 304 calculates the amplitude of the beat signal (Step 104).

Note that the order of Steps 102 and 104 is not limited, and Steps 102 and 104 may be performed in the reverse order from that illustrated in Fig. 15 or may be performed simultaneously.

The detecting section 305 calculates the product value obtained by multiplying the phase difference and the amplitude (Step 105). Note that, at Step 105, the absolute value of the product value may be taken, a moving average may be performed on the product value, or an envelope may be generated for the product value as illustrated in the second embodiment and the third embodiment.

In addition, the detecting section 305 determines whether or not the calculated product value is greater than the predetermined threshold (Step 106). In a case where the product value is greater than the predetermined threshold (YES at Step 106), a gate is generated for an interval during which the predetermined threshold is exceeded (Step 107). That is, at Step 107, an interference signal (interference occurrence time interval) is detected.

### <Other Embodiments>

The present technology is not limited to the embodiments explained above and can be implemented in various other embodiments.

The beat signal is acquired from a real signal and an imaginary signal in the embodiments described above. This is not the sole example. The radar apparatus may output only a real signal to the information processing apparatus 300. In this case, a Hilbert transform may be performed on the acquired real signal, and the beat signal may be acquired from the real signal and the Hilbert-transformed signal.

Here, an example in which the radar apparatus 100 is mounted on a vehicle 1 (vehicle control system 11) as an example of a mobile body is illustrated. That is, the antenna 200 in the present embodiment is equivalent to an external recognition sensor 25 in the vehicle control system described below, and, although not illustrated, the information processing apparatus 300 may be incorporated into the external recognition sensor 25.

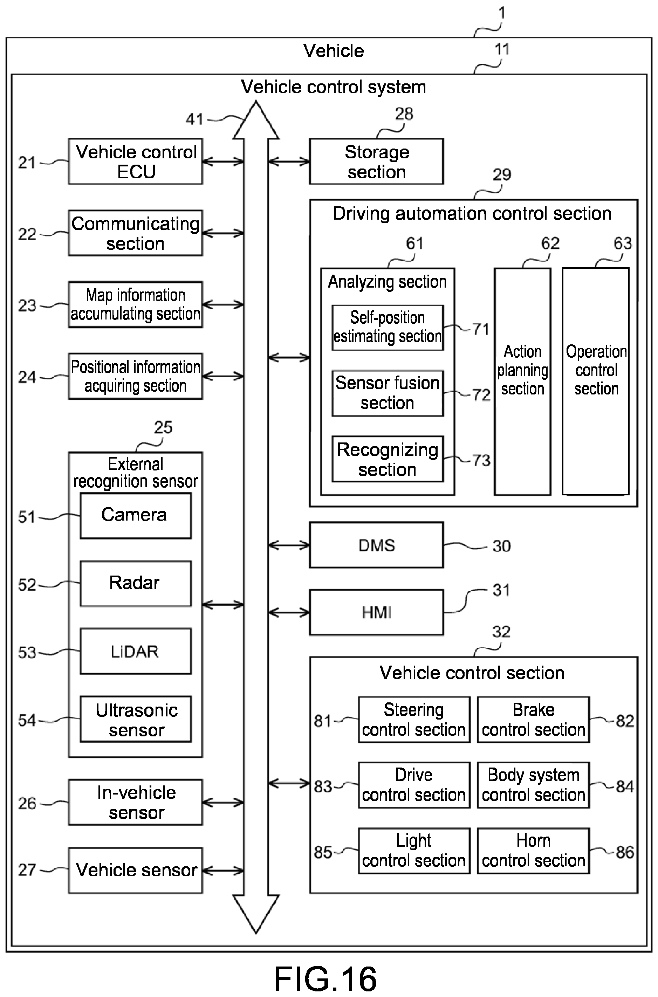

Fig. 16 is a block diagram illustrating a configuration example of the vehicle control system 11, which is a non-limiting example of a moving apparatus control system to which the present technology is applied.

The vehicle control system 11 is provided on the vehicle 1 and performs processes related to the driving automation of the vehicle 1. The driving automation includes the driving automation of Level 1 to Level 5 and the remote driving and/or remote assistance of the vehicle 1 by a remote driver. The levels of driving automation may be referenced in accordance with the Society of Automotive Engineers (SAE) J3016TM APL2021 Levels of Driving Automation. SAE level 0 means the lowest level of driving automation, and SAE level 5 means the highest level of driving automation. For example, driving automation of SAE level 1 may include driver assistance functions that provide steering or braking/acceleration support to the driver, and driving automation of SAE level 5 may include automated driving functions that are capable of driving the vehicle under any condition.

The vehicle control system 11 includes a vehicle control ECU (Electronic Control Unit) 21, a communicating section 22, a map information accumulating section 23, a positional information acquiring section 24, the external recognition sensor 25, an in-vehicle sensor 26, a vehicle sensor 27, a storage section 28, a driving automation control section 29, a DMS (Driver Monitoring System) 30, an HMI (Human Machine Interface) 31, and a vehicle control section 32.

Two or more (or all, in some cases) of the vehicle control ECU 21, the communicating section 22, the map information accumulating section 23, the positional information acquiring section 24, the external recognition sensor 25, the in-vehicle sensor 26, the vehicle sensor 27, the storage section 28, the driving automation control section 29, the DMS 30, the HMI 31, and the vehicle control section 32 are mutually communicatively connected via a communication network 41. For example, the communication network 41 includes an in-vehicle communication network, a bus, or the like conforming to a digital bidirectional communication standard such as CAN (Controller Area Network), LIN (Local Interconnect Network), LAN (Local Area Network), FlexRay (registered trademark), or Ethernet (registered trademark). In some embodiments, the communication network 41 may have two or more types of communication network and may selectively use different types of communication network depending on the type of transferred data. For example, CAN may be applied to data related to vehicle control, and Ethernet may be applied to large volume data. In some embodiments, two or more (or all, in some cases) of the units in the vehicle control system 11 may be directly connected using wireless communication (e.g. communication over a relatively short distance), bypassing the communication network 41. In some embodiments, the wireless communication may use a near field wireless communication technology. Non-limiting examples of the near field wireless communication technology include near field communication (NFC (Near Field Communication)) and Bluetooth (registered trademark). In some embodiments, two or more (or all, in some cases) of the units in the vehicle control system 11 may be connected using the communication network 41 and a wireless communication technology (e.g. near field wireless communication technology).

Hereinbelow, the description of the communication network 41 is omitted in an embodiment in which two or more of the units in the vehicle control system 11 communicate via the communication network 41. For example, in an embodiment in which the vehicle control ECU 21 and the communicating section 22 communicate via the communication network 41, it is written simply that the vehicle control ECU 21 and the communicating section 22 communicate.

For example, the vehicle control ECU 21 includes various types of processor such as a CPU (Central Processing Unit) or an MPU (Micro Processing Unit). The vehicle control ECU 21 controls all or some of the functions of the vehicle control system 11.

The communicating section 22 communicates with various apparatuses located inside the vehicle 1 (hereinbelow, referred to as vehicle internal apparatuses), various apparatuses located outside the vehicle 1 (hereinbelow, referred to as vehicle external apparatuses), other vehicles, base stations, and the like and performs transmission and reception of various types of data. In some embodiments, the communicating section 22 may perform communication using a plurality of communication technologies.

A non-limiting example of communication between the communicating section 22 and a vehicle external apparatus is explained briefly. In some embodiments, the communicating section 22 may communicate with a server (hereinbelow, called an external server) on an external network or the like via base station or an access point using a wireless communication technology. Non-limiting examples of the wireless communication technology include 5G (5th Generation Mobile Communication System), LTE (Long Term Evolution), DSRC (Dedicated Short Range Communications), and the like. For example, the external network that the communicating section 22 can communicate with is the Internet, a cloud network, a proprietary network, and the like. The communication technology used by the communicating section 22 that communicates with the external network is not limited particularly as long as it is a wireless communication technology that allows digital bidirectional communication at a predetermined communication speed or higher and over a predetermined distance or longer.

In some embodiments, the communicating section 22 may communicate with a terminal near the user's vehicle using a P2P (Peer To Peer) technology. For example, the terminal near the user's vehicle is a terminal attached to a pedestrian or a mobile body such as a bicycle that moves at a relatively low speed, a terminal that is positionally fixedly installed in a store or the like, and/or an MTC (Machine Type Communication) terminal. In some embodiments, the communicating section 22 may perform V2X (Vehicle to Everything) communication. V2X communication typically means communication between a user's vehicle and other entities. Non-limiting examples of V2X communication include vehicle to vehicle (Vehicle to Vehicle) communication with another vehicle, vehicle to infrastructure (Vehicle to Infrastructure) communication with a roadside apparatus or the like, vehicle to home (Vehicle to Home) communication, vehicle to pedestrian (Vehicle to Pedestrian) communication with a terminal or the like carried by or attached to a pedestrian, and the like.

In some embodiments, the communicating section 22 may receive, from the outside of the vehicle 1 (e.g. Over The Air), a program for updating software that controls the operation of the vehicle control system 11. In some embodiments, the communicating section 22 may receive, from the outside of the vehicle 1, map information, traffic information, surrounding information of the vehicle 1, and the like. In some embodiments, the communicating section 22 may transmit information about the vehicle 1, surrounding information of the vehicle 1, and the like to a vehicle external apparatus or an external network. Non-limiting examples of information about the vehicle 1 that the communicating section 22 transmits to a vehicle external apparatus or an external network include data representing the state of the vehicle 1, results of recognition by a recognizing section 73, and the like. In some embodiments, the communicating section 22 may communicate with a vehicle emergency call system. Non-limiting examples of the vehicle emergency call system include eCall and the like.

In some embodiments, the communicating section 22 may receive electromagnetic waves transmitted by a road traffic information communication system. In some embodiments, the electromagnetic waves may be transmitted using radio beacons, optical beacons, FM multiplex broadcasting, or the like.

Non-limiting examples of communication that the communicating section 22 can execute with an vehicle internal apparatus are explained briefly. In some embodiments, the communicating section 22 may communicate with a vehicle internal apparatus using wireless communication. For example, in some embodiments, the communicating section 22 may wirelessly communicate with a vehicle internal apparatus by a wireless communication technology that allows digital bidirectional communication at a predetermined communication speed or higher by wireless communication. Non-limiting examples of the wireless communication technology include wireless LAN, Bluetooth, NFC, and WUSB (Wireless USB). This is not the sole example. The communicating section 22 may communicate with a vehicle internal apparatus using wired communication (in addition to or in place of wireless communication). For example, in some embodiments, the communicating section 22 may communicate with a vehicle internal apparatus by wired communication via a cable connected to an unillustrated connection terminal. In some embodiments, the communicating section 22 may communicate with a vehicle internal apparatus by a wired communication technology that allows digital bidirectional communication at a predetermined communication speed or higher. Non-limiting examples of the wired communication technology include USB (Universal Serial Bus), HDMI (High Definition Multimedia Interface) (registered trademark), and MHL (Mobile High definition Link).

Here, for example, vehicle internal apparatuses mean apparatuses not connected to the communication network 41 inside the vehicle 1. The vehicle internal apparatuses are classified into apparatuses included in the vehicle control system 11 and apparatuses not included in the vehicle control system 11. Non-limiting examples of the vehicle internal apparatuses not included in the vehicle control system 11 include a mobile apparatus or a wearable apparatus carried by a user (e.g. the driver or a passenger) of the vehicle 1, an information apparatus that is temporarily installed inside the vehicle 1, and the like. For example, these apparatuses can be vehicle external apparatuses after being moved to the outside of the vehicle 1.

The map information accumulating section 23 accumulates maps acquired from a vehicle external apparatus or an external network and/or a map created at the vehicle 1. For example, the map information accumulating section 23 may accumulate three dimensional high precision maps, global maps that have precision lower than the high precision maps, and cover larger areas, or the like.

For example, the high precision maps are dynamic maps, point cloud maps, vector maps, or the like. For example, the dynamic maps may be maps including four layers, which are dynamic information, semi dynamic information, semi static information, and static information, and may be provided from an external server or the like to the vehicle 1. The point cloud maps may be maps including point clouds (point cloud data). For example, the vector maps may be maps in which traffic information or the like such as the positions of lanes or traffic lights is associated with the point cloud maps to be conform to driving automation.

For example, the point cloud maps and the vector maps may be provided from an external server or the like or may be created at the vehicle 1 as maps for performing matching with a local map mentioned later on the basis of results of sensing by cameras 51, radars 52, a LiDAR 53, or the like and accumulated in the map information accumulating section 23. In addition, in a case where the high precision maps are provided from an external server or the like, map data that is related to a planned path that the vehicle 1 is traveling and represents the area of, for example, several hundred square meters may be acquired from the external server or the like in order to reduce the amount of communicated data.

The positional information acquiring section 24 acquires positional information about the vehicle 1. The acquired positional information may be supplied to the driving automation control section 29. In some embodiments, the positional information acquiring section 24 may receive GNSS signals from a GNSS (Global Navigation Satellite System) satellite. In some embodiments, the positional information acquiring section 24 may receive signals from beacons or the like.

The external recognition sensor 25 includes various types of sensor used for recognition of the condition of the outside of the vehicle 1 and supplies sensor data from one or more (or all, in some cases) of sensors to one or more (or all, in some cases) of the units in the vehicle control system 11. The types and number of the sensors included in the external recognition sensor 25 can be any types and number.

In some embodiments, the external recognition sensor 25 may include the cameras 51, the radars 52, the LiDAR (Light Detection and Ranging, Laser Imaging Detection and Ranging) 53, and ultrasonic sensors 54. This is not the sole example. The external recognition sensor 25 may include one or more types of sensor in the cameras 51, the radars 52, the LiDAR 53, and the ultrasonic sensors 54. The number of the cameras 51, the radars 52, the LiDAR 53, and the ultrasonic sensors 54 is not limited particularly as long as they can be really installed on the vehicle 1. In addition, the types of sensor included in the external recognition sensor 25 are not limited to this example, but the external recognition sensor 25 may include other types of sensor. Examples of the sensing region of each sensor included in the external recognition sensor 25 is mentioned later.

The cameras 51 can use any suited image capturing scheme. In some embodiments, the cameras 51 may use an image capturing scheme that allows distance measurement. Non-limiting examples of the cameras that use the image capturing scheme that allows distance measurement include a ToF (Time Of Flight) camera, a stereo camera, a monocular camera, and an infrared camera. This is not the sole example. The cameras 51 may be ones that are not related to distance measurement, but are for simply acquiring captured images.

In some embodiments, the external recognition sensor 25 may include an environment sensor for sensing features of the environment around the vehicle 1. Non-limiting examples of the features of the environment that can be sensed include weather, atmospheric conditions, brightness, and the like. In some embodiments, the environment sensor may include various types of sensor such as a raindrop sensor, a fog sensor, a sunlight sensor, a snow sensor, and an illuminance sensor.

In some embodiments, the external recognition sensor 25 may include a microphone used for sensing sounds around the vehicle 1 and the positions of the sound sources or the like.

The in-vehicle sensor 26 includes various types of sensor for sensing information about the inside of the vehicle 1 and supplies sensor data from one or more (or all, in some cases) of sensors to one or more (or all, in some cases) of the units in the vehicle control system 11. The types and number of the various types of sensor included in the in-vehicle sensor 26 are not limited particularly as long as they can be really installed on the vehicle 1.

In some embodiments, the in-vehicle sensor 26 may include one or more sensors of a camera, a radar, a seating sensor, a microphone, and a biometric sensor. In some embodiments, the camera included in the in-vehicle sensor 26 may use an image capturing scheme that allows distance measurement. Non-limiting examples of the camera that uses the image capturing scheme that allows distance measurement include a ToF camera, a stereo camera, a monocular camera, and an infrared camera. This is not the sole example. The camera included in the in-vehicle sensor 26 may be one that is not related to distance measurement, but is for simply acquiring captured images. For example, the biometric sensor included in the in-vehicle sensor 26 may be provided on a seat, the steering wheel, or the like and may sense various types of biometric information about a user.

The vehicle sensor 27 includes various types of sensor for sensing the state of the vehicle 1 and supplies sensor data from one or more (or all, in some cases) of sensors to one or more (or all, in some cases) of the units in the vehicle control system 11. The types and number of the various types of sensor included in the vehicle sensor 27 are not limited particularly as long as they can be really installed on the vehicle 1.

In some embodiments, the vehicle sensor 27 may include a speed sensor, an acceleration sensor, an angular velocity sensor (gyro sensor), and/or an inertial measurement unit (IMU (Inertial Measurement Unit)) formed by integrating them. In some embodiments, the vehicle sensor 27 may include a steering angle sensor that senses the steering angle of the steering wheel, a yaw rate sensor, an accelerator sensor that senses the operation amount of the accelerator pedal (e.g. pedal force, pedal stroke) and/or a brake sensor that senses the operation amount of the brake pedal (e.g. pedal force, pedal stroke). In some embodiments, the vehicle sensor 27 may include a rotation sensor that senses the rotation speed of an engine or a motor, an air pressure sensor that senses the air pressure of a tire, a skid rate sensor that senses the skid rate of a tire, and/or a wheel speed sensor that senses the rotation speed of a wheel. In some embodiments, the vehicle sensor 27 may include a battery sensor that senses a battery level and temperature, and/or a shock sensor that is capable of sensing external shocks.

The storage section 28 includes at least one of a non-volatile storage medium or a volatile storage medium and stores data and programs. Non-limiting examples of the storage medium include a magnetic storage device, a semiconductor storage device, an optical storage device, and a magneto optical storage device such as an EEPROM (Electrically Erasable Programmable Read Only Memory), a RAM (Random Access Memory), and/or an HDD (Hard Disc Drive). The storage section 28 stores various types of program and data used by one or more (or all, in some cases) of the units in the vehicle control system 11. In some embodiments, the storage section 28 may include an EDR (Event Data Recorder) or a DSSAD (Data Storage System for Automated Driving) and store information about the vehicle 1 before and after an event such as an accident and information acquired by the in-vehicle sensor 26.

The driving automation control section 29 controls the driving automation function of the vehicle 1. In some embodiments, the driving automation control section 29 may include an analyzing section 61, an action planning section 62, and an operation control section 63.

The analyzing section 61 performs a process of analyzing the condition of the vehicle 1 and/or the condition around the vehicle 1. The analyzing section 61 includes a self-position estimating section 71, a sensor fusion section 72, and the recognizing section 73.

In some embodiments, the self-position estimating section 71 may estimate the self-position of the vehicle 1 on the basis of sensor data from the external recognition sensor 25 and high precision maps accumulated in the map information accumulating section 23. For example, the self-position estimating section 71 may generate a local map on the basis of sensor data from the external recognition sensor 25 and perform matching between the local map and high precision maps to thereby estimate the self-position of the vehicle 1. For example, the position of the vehicle 1 may be represented using the center of the axle of the rear wheel pair as a reference position.

In some embodiments, the local map may be a three dimensional high precision map created using a technology such as SLAM (Simultaneous Localization and Mapping), an occupancy grid map (Occupancy Grid Map), or the like. For example, the three dimensional high precision map may be a point cloud map mentioned above, or the like. The occupancy grid map may be a map that has grid squares (cells) with a predetermined size obtained by dividing the three dimensional or two dimensional space around the vehicle 1 and represents the object occupancy state of each grid square. For example, the object occupancy state may be represented by the presence or absence or presence probability of an object. In some embodiments, for example, the local map may be used also for processes of sensing and/or recognizing the condition of the outside of the vehicle 1 performed by the recognizing section 73.

In some embodiments, the self-position estimating section 71 may estimate the self-position of the vehicle 1 on the basis of positional information acquired by the positional information acquiring section 24 and/or sensor data from the vehicle sensor 27.

The sensor fusion section 72 performs a sensor fusion process of combining multiple different types of sensor data (e.g. image data supplied from the cameras 51 and sensor data supplied from the radars 52) and obtaining information. Examples of the method of combining the different types of sensor data include, but not limited to, synthesis, integration, fusion, concatenation, or the like.

The recognizing section 73 executes a sensing process of sensing the condition of the outside of the vehicle 1 and/or a recognition process of recognizing the condition of the outside of the vehicle 1.

For example, the recognizing section 73 may perform processes of sensing and/or recognizing the condition of the outside of the vehicle 1 on the basis of information from the external recognition sensor 25, information from the self-position estimating section 71, information from the sensor fusion section 72, and the like.

Specifically, for example, the recognizing section 73 may perform processes of sensing and/or recognizing objects around the vehicle 1 or the like. For example, the object sensing process may be a process of sensing the presence or absence, sizes, shapes, positions, motions, and the like of objects. For example, the object recognition process may be a process of recognizing the attribute, such as type, of an object, identifying a particular object, and so on. The sensing process and the recognition process are not necessarily clearly separate processes, but may be at least partially overlapping processes in some cases.

In some embodiments, the recognizing section 73 may sense objects around the vehicle 1 by performing clustering to classify point clouds based on sensor data from the radars 52 and/or the LiDAR 53 or the like into each cluster of point clouds. Thereby, the presence or absence, sizes, shapes, and positions of objects around the vehicle 1 can be sensed.

In some embodiments, the recognizing section 73 may sense a motion of an object around the vehicle 1 by tracking motions of a cluster of point clouds classified by clustering. Thereby, the speed and/or advancing direction (movement vector) of the object around the vehicle 1 can be sensed.

In some embodiments, the recognizing section 73 may sense and/or recognize vehicles (including bicycles), humans, obstacles, structures, roads, traffic lights, traffic signs, road markings, and the like on the basis of image data supplied from the cameras 51. In some embodiments, the recognizing section 73 may recognize the types of objects around the vehicle 1 by performing a recognition process such as semantic segmentation.

In some embodiments, the recognizing section 73 may perform a process of recognizing traffic rules around the vehicle 1 on the basis of maps accumulated in the map information accumulating section 23, results of estimation of the self-position by the self-position estimating section 71, and/or results of recognition of objects around the vehicle 1 by the recognizing section 73. By this process, the recognizing section 73 may recognize the positions and/or states of traffic lights, the content of traffic signs and/or road markings, the content of traffic regulations, and/or lanes where vehicles are allowed to travel or the like.

In some embodiments, the recognizing section 73 may perform a process of recognizing the surrounding environment of the vehicle 1. In some embodiments, the recognizing section 73 may recognize weather features (temperature, humidity, brightness), and/or road surface states or the like.

The action planning section 62 creates an action plan of the vehicle 1. For example, the action planning section 62 may create the action plan by performing path planning and path tracking.

In some embodiments, the path planning may include global path planning (Global path planning) and local path planning (Local path planning). The global path planning may include a process of planning an approximate path from a start to a goal. The local path planning may include a process which is also called trajectory planning, in which generation of a trajectory, near the vehicle 1 along the planned path, that allows the vehicle 1 to advance safely and smoothly is performed taking into consideration the movement characteristics of the vehicle 1, the presence of any obstacles, and the like.

In some embodiments, the path tracking may be planning an operation for allowing the vehicle 1 to travel the path planned by the path planning in a planned time safely and accurately. For example, the action planning section 62 may compute a target speed and/or a target angular velocity of the vehicle 1 on the basis of results of the path tracking process.

The operation control section 63 controls the operation of the vehicle 1 in order to achieve the action plan created by the action planning section 62.

For example, in some embodiments, the operation control section 63 may control a steering control section 81, a brake control section 82, and/or a drive control section 83 that are included in the vehicle control section 32 mentioned later to perform lateral vehicle movement control and/or longitudinal vehicle movement control such that the vehicle 1 advances along the trajectory computed by the trajectory planning. For example, the operation control section 63 may perform control (e.g. lateral vehicle movement control, longitudinal vehicle movement control) aimed for one or more driver assistance functions and/or driving automation. Non-limiting examples of the driver assistance functions include collision avoidance or shock mitigation, inter vehicle distance control (e.g. control to maintain a particular distance from a vehicle traveling in front of the vehicle 1), vehicle speed control (e.g. control to maintain a particular speed), vehicle collision warning, and lane deviation warning. Non-limiting examples of the driving automation include traveling not relying on operation by the driver or a remote driver.

In some embodiments, the DMS 30 may perform a process of authenticating the driver and/or a process of recognizing the state of the driver or the like on the basis of sensor data from the in-vehicle sensor 26, and/or input data input to the HMI 31 mentioned later or the like. Non-limiting examples of aspects of the state of the driver that can be targets to be recognized include physical conditions, the degree of awakening, the degree of concentration, the fatigue, the line of sight direction, the degree of drunkenness, driving operation, the posture, and the like.

In some embodiments, the DMS 30 may perform a process of authenticating a user (e.g. passenger) other than the driver and/or a process of recognizing the state of the user. In some embodiments, the DMS 30 may perform a process of recognizing the internal condition of the vehicle 1 on the basis of sensor data from the in-vehicle sensor 26. Non-limiting examples of features of the internal condition of the vehicle 1 that can be recognition targets include temperature, humidity, brightness, odor, and the like.

The HMI 31 is used for inputting various types of data, instructions, and the like and presents various types of data to a user.

Data input on the HMI 31 is explained briefly. The HMI 31 includes an input device used by a human to input data, instructions, and the like. The HMI 31 generates an input signal on the basis of data, instructions, or the like input by using the input device and supplies the input signal to one or more (or all, in some cases) of the units in the vehicle control system 11. In some embodiments, the HMI 31 may include a touch panel, a button, a switch, and/or a lever as an input device. This is not the sole example. The HMI 31 may include an input device that enables information input by a method not involving manual operation, but involving sounds, gestures, or the like. In some embodiments, the HMI 31 may include, as an input device, a remote control apparatus that uses infrared rays and/or radio waves or an externally connected apparatus that supports operation of the vehicle control system 11. Non-limiting examples of the externally connected apparatus include a mobile apparatus (e.g. smartphone) and a wearable apparatus (e.g. smart watch).

Data presentation by the HMI 31 is explained briefly. The HMI 31 generates visual information, auditory information, and/or tactile information for users and/or humans positioned outside the vehicle 1. In addition, the HMI 31 may perform output control of controlling the output, output content, output timing, and/or output method or the like of each piece of the generated information. Non-limiting examples of the visual information that can be generated and output by the HMI 31 include information represented by images or light such as monitor images representing operation screens, status display about the vehicle 1, warning display, or the condition around the vehicle 1. Non-limiting examples of the auditory information that can be generated and output by the HMI 31 include audio guidance, warning sounds, warning messages, and the like. Non-limiting examples of the tactile information that can be generated and output by the HMI 31 include information to be given to the tactile sensation of a user by force, vibration, motion, or the like.

In some embodiments, the HMI 31 may include, as output devices that are capable of outputting visual information, a display apparatus that presents visual information by displaying images by itself and a projector apparatus that presents visual information by projecting images. In some embodiments, in addition to or in place of a typical display apparatus, the display apparatus may be also an apparatus that displays visual information in the visual field of a user such as a head up display, a transmission display, or a wearable device having an AR (Augmented Reality) function. In some embodiments, the HMI 31 may include, as an output device that is capable of outputting visual information, a display device of a navigation apparatus, an instrument panel, a CMS (Camera Monitoring System), an electronic mirror, a lamp, or the like provided to the vehicle 1.

In some embodiments, the HMI 31 may include an audio speaker, headphones, or earphones as output devices that are capable of outputting auditory information.

In some embodiments, the HMI 31 may include a haptic element using a haptics technology as an output device that is capable of outputting tactile information. For example, the haptic element may be provided at a portion of the vehicle 1 where a user of the vehicle 1 contacts such as the steering wheel or a seat.

The vehicle control section 32 controls one or more (or all, in some cases) of the units in the vehicle 1. The vehicle control section 32 includes the steering control section 81, the brake control section 82, the drive control section 83, a body system control section 84, a light control section 85, and a horn control section 86.

The steering control section 81 performs sensing and/or control of the state of the steering system of the vehicle 1 or the like. For example, the steering system includes a steering mechanism including the steering wheel or the like, electric power steering, and the like. For example, the steering control section 81 includes a steering ECU that controls the steering system, an actuator that drives the steering system, and the like.

The brake control section 82 performs sensing and/or control of the state of the brake system of the vehicle 1 or the like. For example, the brake system includes a brake mechanism including the brake pedal or the like, an ABS (Antilock Brake System), a regenerative brake mechanism, and the like. For example, the brake control section 82 includes a brake ECU that controls the brake system, an actuator that drives the brake system, and the like.

The drive control section 83 performs sensing and/or control of the state of the drive system of the vehicle 1 or the like. For example, the drive system includes the accelerator pedal, a drive force generating apparatus for generating drive force such as an internal combustion engine or a drive motor, a drive force transmission mechanism for transmitting the drive force to wheels, and the like. For example, the drive control section 83 includes a drive ECU that controls the drive system, an actuator that drives the drive system, and the like.

The body system control section 84 performs sensing and/or control of the state of the body system of the vehicle 1 or the like. For example, the body system includes a keyless entry system, a smart key system, a power window apparatus, power seats, an air conditioning apparatus, airbags, seat belts, a shift lever, and the like. For example, the body system control section 84 includes a body system ECU that controls the body system, an actuator that drives the body system, and the like.

The light control section 85 performs sensing and/or control of the states of various types of light of the vehicle 1 or the like. Non-limiting examples of target lights to be controlled by the light control section 85 include headlights, taillights, fog lights, turn signals, brake lights, projector lights, bumper displays, and the like. The light control section 85 includes a light ECU that controls lights, actuators that drive the lights, and the like.

The horn control section 86 performs sensing and/or control of the state of a car horn of the vehicle 1 or the like. For example, the horn control section 86 includes a horn ECU that controls the car horn, an actuator that drives the car horn, and the like.

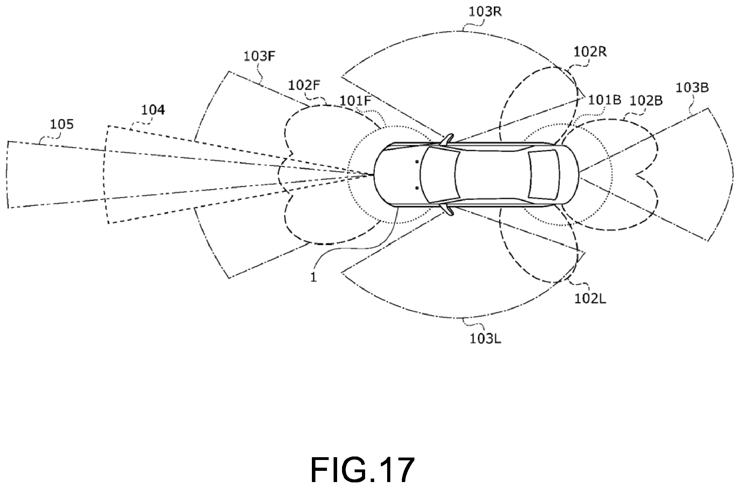

Fig. 17 is a drawing illustrating examples of the sensing regions of the cameras 51, the radars 52, the LiDAR 53, the ultrasonic sensors 54, and the like of the external recognition sensor 25 in Fig. 16. Fig. 17 schematically illustrates the state of the vehicle 1 as seen from above.

A sensing region 101F and a sensing region 101B represent examples of the sensing regions of the ultrasonic sensors 54. The sensing region 101F (e.g. the sensing region of a plurality of ultrasonic sensors 54) covers the vicinity of the front end of the vehicle 1. The sensing region 101B (e.g. the sensing region of the plurality of ultrasonic sensors 54) covers the vicinity of the rear end of the vehicle 1.

For example, results of sensing in the sensing region 101F and/or the sensing region 101B may be used for parking assistance of the vehicle 1 and the like.

A sensing region 102F, a sensing region 102B, a sensing region 102L, and a sensing region 102R represent examples of the sensing region of the short range or middle range radar 52. In front of the vehicle 1, the sensing region 102F covers positions farther than the sensing region 101F. Behind the vehicle 1, the sensing region 102B covers positions farther than the sensing region 101B. The sensing region 102L covers the vicinity behind the left side of the vehicle 1. The sensing region 102R covers the vicinity behind the right side of the vehicle 1.

For example, results of sensing in the sensing region 102F may be used for sensing vehicles, pedestrians, and the like that are in front of the vehicle 1 and the like. For example, results of sensing in the sensing region 102B may be used for a function to prevent collisions behind the vehicle 1 and the like. For example, results of sensing in the sensing region 102L and/or the sensing region 102R may be used for sensing one or more objects in blind spots on the left side and/or right side of the vehicle 1 and the like.

A sensing region 103F, a sensing region 103B, a sensing region 103L, and a sensing region 103R represent examples of the sensing regions of the cameras 51. In front of the vehicle 1, the sensing region 103F covers positions farther than the sensing region 102F. Behind the vehicle 1, the sensing region 103B covers positions farther than the sensing region 102B. The sensing region 103L covers the vicinity of the left side of the vehicle 1. The sensing region 103R covers the vicinity of the right side of the vehicle 1.

For example, results of sensing in the sensing region 103F may be used for recognition of traffic lights and traffic signs, a lane deviation prevention assistance system, and an automatic headlight control system. For example, results of sensing in the sensing region 103B may be used for parking assistance and/or a surround view system. For example, results of sensing in the sensing region 103L and/or the sensing region 103R may be used for the surround view system.

A sensing region 104 represents an example of the sensing region of the LiDAR 53. In front of the vehicle 1, the sensing region 104 covers positions farther than the sensing region 103F. On the other hand, the sensing region 104 has a narrower range in the left right direction of the vehicle 1 than the sensing region 103F.

For example, results of sensing in the sensing region 104 may be used for sensing objects such as nearby vehicles.

A sensing region 105 represents an example of the sensing region of a long range radar 52. In front of the vehicle 1, the sensing region 105 covers positions farther than the sensing region 104. On the other hand, the sensing region 105 has a narrower range in the left right direction of the vehicle 1 than the sensing region 104.

For example, results of sensing in the sensing region 105 may be used for ACC (Adaptive Cruise Control), emergency braking, collision avoidance, and the like.

In some embodiments, the sensing region of each sensor of the external recognition sensor 25 (e.g. the cameras 51, the radars 52, the LiDAR 53, the ultrasonic sensors 54) may have various types of configuration other than the configuration illustrated in Fig. 17. Specifically, in some embodiments, the ultrasonic sensors 54 may perform sensing also of the sides of the vehicle 1, and the LiDAR 53 may perform sensing of the rear of the vehicle 1. In addition, the installation position of each sensor is not limited to each example mentioned above. In addition, the number of each sensor may be one or may be more than one.

At least two feature portions in the feature portions of each embodiment explained above can also be combined.

Note that advantageous effects described in the present disclosure are merely illustrative and not limiting, and there may be other advantageous effects. The description of a plurality of the advantageous effects described above does not mean that the advantageous effects are necessarily achieved simultaneously. It is meant that at least any of the advantageous effects described above is achieved depending on the conditions and the like, and certainly there is also a possibility that advantageous effects not described in the present disclosure are achieved.

At least two feature portions in the feature portions of each embodiment explained above can also be combined. That is, various feature portions explained in each embodiment may be combined as desired, without distinctions among the respective embodiments. In addition, the various advantageous effects described above are merely illustrative and not limiting, and other advantageous effects may be achieved.

Note that the present technology can adopt also configurations like the ones below.
(1) An information processing apparatus including:
   a calculating section that calculates a phase of a beat signal generated on the basis of a transmission chirp signal transmitted toward an object by a transmission antenna and a reflection chirp signal which is the transmission chirp signal received by a reception antenna and reflected by the object; and
   a detecting section that detects presence or absence of an unwanted signal on the basis of the phase of the beat signal.
(2) The information processing apparatus according to (1), in which
   the detecting section detects the presence or absence of the unwanted signal on the basis of a phase difference which is a difference between the phase of the beat signal at a first time and the phase of the beat signal at a second time different from the first time.
(3) The information processing apparatus according to (2), in which
   the detecting section detects the presence or absence of the unwanted signal on the basis of the phase difference and amplitude of the beat signal.
(4) The information processing apparatus according to (3), in which
   the unwanted signal includes an interference signal transmitted from another transmission antenna different from the transmission antenna.
(5) The information processing apparatus according to (4), in which
   the detecting section detects the presence or absence of the interference signal on the basis of a product value obtained by multiplying the phase difference and the amplitude.
(6) The information processing apparatus according to (5), in which
   the detecting section detects the presence or absence of the interference signal on the basis of an absolute value of the product value.
(7) The information processing apparatus according to (6), in which
   the detecting section detects the presence or absence of the interference signal by performing a moving average on the absolute value of the product value.
(8) The information processing apparatus according to (6), in which
   the detecting section detects the presence or absence of the interference signal in a case where the absolute value of the product value is greater than a predetermined threshold.
(9) The information processing apparatus according to (8), in which
   the detection of the presence or absence of the interference signal includes detection of an interference occurrence time interval which is a time interval during which the interference signal is being generated, and
   the interference occurrence time interval is an interval during which the absolute value of the product value is greater than a predetermined threshold.
(10) The information processing apparatus according to (6), in which
   the detecting section detects the presence or absence of the interference signal by generating an envelope of the absolute value of the product value.
(11) The information processing apparatus according to (8), in which
   the predetermined threshold is calculated from an average value of the absolute value of the product value.
(12) The information processing apparatus according to (1), in which
   the beat signal is acquired from a real signal and an imaginary signal.
(13) The information processing apparatus according to (12), in which
   the beat signal is acquired from the real signal and a Hilbert-transformed signal of the real signal.
(14) An information processing method executed by a computer system, the information processing method including:
   calculating a phase of a beat signal generated on the basis of a transmission chirp signal transmitted toward an object by a transmission antenna and a reflection chirp signal which is the transmission chirp signal received by a reception antenna and reflected by the object; and
   detecting presence or absence of an unwanted signal on the basis of the phase of the beat signal.
(15) A radar apparatus including:
   a transmission antenna that transmits a transmission chirp signal toward an object;
   a reception antenna that receives a reflection chirp signal which is the transmission chirp signal reflected by the object; and
   an information processing apparatus including
      a calculating section that calculates a phase of a beat signal generated on the basis of the transmission chirp signal and the reflection chirp signal, and
      a detecting section that detects presence or absence of an unwanted signal on the basis of the phase of the beat signal.

### Reference Signs List

- 1: mobile body, vehicle

- 11: vehicle control system
- 25: external recognition sensor
- 100: radar apparatus
- 200: antenna
- 300: information processing apparatus
- 302: phase calculating section
- 303: phase difference calculating section
- 305: detecting section

## Claims

1. An information processing apparatus comprising:
a calculating section that calculates a phase of a beat signal generated on a basis of a transmission chirp signal transmitted toward an object by a transmission antenna and a reflection chirp signal which is the transmission chirp signal received by a reception antenna and reflected by the object; and
a detecting section that detects presence or absence of an unwanted signal on a basis of the phase of the beat signal.

2. The information processing apparatus according to claim 1, wherein
the detecting section detects the presence or absence of the unwanted signal on a basis of a phase difference which is a difference between the phase of the beat signal at a first time and the phase of the beat signal at a second time different from the first time.

3. The information processing apparatus according to claim 2, wherein
the detecting section detects the presence or absence of the unwanted signal on a basis of the phase difference and amplitude of the beat signal.

4. The information processing apparatus according to claim 3, wherein
the unwanted signal includes an interference signal transmitted from another transmission antenna different from the transmission antenna.

5. The information processing apparatus according to claim 4, wherein
the detecting section detects the presence or absence of the interference signal on a basis of a product value obtained by multiplying the phase difference and the amplitude.

6. The information processing apparatus according to claim 5, wherein
the detecting section detects the presence or absence of the interference signal on a basis of an absolute value of the product value.

7. The information processing apparatus according to claim 6, wherein
the detecting section detects the presence or absence of the interference signal by performing a moving average on the absolute value of the product value.

8. The information processing apparatus according to claim 6, wherein
the detecting section detects the presence or absence of the interference signal in a case where the absolute value of the product value is greater than a predetermined threshold.

9. The information processing apparatus according to claim 8, wherein
the detection of the presence or absence of the interference signal includes detection of an interference occurrence time interval which is a time interval during which the interference signal is being generated, and
the interference occurrence time interval is an interval during which the absolute value of the product value is greater than a predetermined threshold.

10. The information processing apparatus according to claim 6, wherein
the detecting section detects the presence or absence of the interference signal by generating an envelope of the absolute value of the product value.

11. The information processing apparatus according to claim 8, wherein
the predetermined threshold is calculated from an average value of the absolute value of the product value.

12. The information processing apparatus according to claim 1, wherein
the beat signal is acquired from a real signal and an imaginary signal.

13. The information processing apparatus according to claim 12, wherein
the beat signal is acquired from the real signal and a Hilbert-transformed signal of the real signal.

14. An information processing method executed by a computer system, the information processing method comprising:
calculating a phase of a beat signal generated on a basis of a transmission chirp signal transmitted toward an object by a transmission antenna and a reflection chirp signal which is the transmission chirp signal received by a reception antenna and reflected by the object; and
detecting presence or absence of an unwanted signal on a basis of the phase of the beat signal.

15. A radar apparatus comprising:
a transmission antenna that transmits a transmission chirp signal toward an object;
a reception antenna that receives a reflection chirp signal which is the transmission chirp signal reflected by the object; and
an information processing apparatus including
a calculating section that calculates a phase of a beat signal generated on a basis of the transmission chirp signal and the reflection chirp signal, and
a detecting section that detects presence or absence of an unwanted signal on a basis of the phase of the beat signal.
